# EUROPEAN PATENT APPLICATION

(11) **EP 2 448 168 A1**
(43) Date of publication of application: **02.05.2012**
(21) Application number: 09848197.1
(22) Date of filing: 01.12.2009
(51) Int. Cl.: H04L 7/00, H04B 10/12

(54) **METHOD AND SYSTEM FOR BEARING TIME SYNCHRONIZATION PROTOCOL IN OPTICAL TRANSPORT NETWORK**

(30) Priority: 14.08.2009 CN 200910162637
(71) Applicant: ZTE Corporation, Shenzhen, Guangdong 518057 (CN)
(72) Inventor: SONG, Xiaopeng, Shenzhen Guangdong 518057 (CN); YUAN, Yan, Shenzhen Guangdong 518057 (CN); WANG, Linfeng, Shenzhen Guangdong 518057 (CN); SU, Fei, Shenzhen Guangdong 518057 (CN); GU, Yuan, Shenzhen Guangdong 518057 (CN)
(74) Representative: Thul, Stephan
(86) International application number: PCT/CN2009/075232
(87) International publication number: WO 2011/017867

(57) **Abstract**

The present invention discloses a method and a system for correcting a time when an Optical Transport Network (OTN) bears a time synchronization protocol, which are used for solving the technical problem that the time synchronization protocol cannot be transported normally because of the unfixed transport delay time of the OTN network. In the present invention, when time synchronization protocol data are added in and dropped off the OTN network, a delay time during which the data passes through the OTN network is calculated based on an accurate synchronization time inside the OTN network, and the delay time is written in a correction filed of the time synchronization protocol data packet, thereby correcting the influence on the time synchronization protocol caused by the unfixed delay time in the OTN network.

## Description

### Technical Field

The present invention relates to the field of the optical transport network technique, and specifically, to a method and a system for correcting time information when an optical transport network bears a time synchronization protocol.

### Background of the Related Art

With the development of the communication system, the optical transport network (OTN) gradually becomes the mainstream of the transport network, and especially, the OTN network is gradually developed as a platform bearing multiple services on the basis of the maturity of the cross scheduling technique of OTN. With the popularization of the 3G communication network and the development of the next generation long term evolution (LTE), the application of bearing the wireless services by the OTN network becomes more and more.

The wireless networks of various systems have very high requirements for the time synchronization, while the time synchronization of various networks should be implemented depending on a certain time synchronization protocol; the OTN network, as the fmal bearer of the various other networks including the wireless network, is also required to guarantee the accurate transport of various time synchronization protocols. The common time synchronization protocol is the IEEE Std 1588TM -2008 (called IEEE1588 or PTPv2 for short hereinafter) protocol, and this protocol implements the time synchronization by the Ethernet packet. Although various time synchronization protocols including the IEEE1588 protocol do not have requirements for the time length of the transport delay, the value of the transport delay must be a fixed value, and the bidirectional delays must be equal, and the tolerant delay deviation is at the microsecond level. When the OTN is used as a transport network, various processing of packaging and mapping processes, the processing processes such as forward error correction (FEC), coding and decoding and so on of the OTN may influence the delay time of the services, and fmally cause that the transport delay of the OTN network is not a steady value, for example, when the service is normal, the delay time of the service is ta and is a fixed value, however, if the service is interrupted and then recovers to be normal, the re-measured delay time of the service is tb, generally the difference between ta and tb is not a fixed value, and the different may be up to the magnitude of one microsecond, which may lead to the unequal bidirectional delays of the service; if the number of cascaded services is relatively large, the time synchronization protocol will not be transported normally due to the unfixed transport delay during which the time synchronization protocol is transported by the OTN network.

### Summary of the Invention

In view of this, the main object of the present invention is to provide a method and a system for bearing a time synchronization protocol in an optical transport network, which are used for solving the technical problem that the time synchronization protocol cannot be transported normally because of the unfixed transport delay time of the OTN network. In order to achieve the above object, the technical scheme of the present invention may be implemented as follows.

A method for bearing a time synchronization protocol in an optical transport network comprises:
keeping time synchronization among various network element nodes inside the optical transport network (OTN); and
calculating a delay time during which time synchronization protocol data pass through the OTN, and then correcting the time synchronization protocol data at a drop node of the time synchronization protocol data according to the delay time; or taking a time source of the time synchronization protocol as a time source of the OTN, and transporting local time and clock information to a slave time client device at the drop node of the time synchronization protocol data.

Furthermore, the step of calculating the delay time and then correcting the time synchronization protocol data comprises:
step A1, generating a timestamp according to a local time at a service access unit where the time synchronization protocol accesses the OTN, and transporting the timestamp to a service access unit at an output end together with the time synchronization protocol data; and
step A2, the service access unit at the output end calculating the delay time in a process of transporting the time synchronization protocol data in the OTN according to a local time and the timestamp; when analyzing and obtaining a time related protocol packet in the time synchronization protocol data, writing the delay time into a correction information field of the protocol packet.

Furthermore, the step of taking the time source of the time synchronization protocol as the time source of the OTN, thereby implementing synchronization of time information of the time synchronization protocol data comprises:
step B1, synchronizing the time and clock information on a service access unit where the time synchronization protocol accesses the OTN to time and clock information provided by a master time client device, and at a meantime, taking the time and clock information provided by the master time client device as the time source of a time synchronization unit of this node, and synchronizing the time and clock information of the node to other network element nodes of the OTN; and
step B2, a service access unit at an output end taking local time and clock information as an initiator of the time synchronization protocol to transport the local time and clock information to the slave time client device.

Based on the above method, the present invention further provides a system for bearing a time synchronization protocol in an optical transport network, and the system comprises:
an optical transport network (OTN), which is configured to: bear the time synchronization protocol, wherein various network element nodes inside the OTN keep time synchronization;
a sending end of the time synchronization protocol, which is configured to: send time synchronization protocol data to the OTN;
a receiving end of the time synchronization protocol, which is configured to: receive the time synchronization protocol data from the OTN;
the OTN calculating a delay time of the time synchronization protocol data in the OTN, and correcting time information of the time synchronization protocol data according to the delay time; or the OTN taking the sending end of the time synchronization protocol as a time source, and transporting local time and clock information to the receiving end at a drop node of the time synchronization protocol data.

Furthermore, a service access unit in the OTN is configured to: access and process the time synchronization protocol, and obtain local time information from a time synchronization unit, and calculate the delay time during which the time synchronization protocol being added in and being dropped from the OTN according to the time information, and write this delay time into a time correction field in the time synchronization protocol; the time synchronization unit in the OTN is configured to: synchronize a time among various network element nodes inside the OTN; and a service transport unit in the OTN is configured to: relay an OTN signal inside the OTN, and keep transparent transport for the time synchronization protocol.

Furthermore, a service access unit in the OTN is configured to: access and process the time synchronization protocol, wherein the time and clock information of a service access unit at an input end is synchronized to the time and clock information at the sending end of the time synchronization protocol, and at a meantime, the time and clock information of a service access unit at the input end is synchronized to other network element nodes of the OTN; the service access unit of the output end takes the local time and clock information as an initiator of the time synchronization protocol to transport the local time and clock information to the receiving end of the time synchronization protocol; a time synchronization unit in the OTN is configured to: synchronize a time and a clock among various network element nodes inside the OTN; and a service transport unit in the OTN is configured to: relay an OTN signal inside the OTN, and keep transparent transport for the time synchronization protocol.

In the present invention, when various time synchronization protocols including the IEEE1588 protocol is transported by the OTN network, it should be ensured that there is a unified time in the internal nodes of the OTN network firstly, the time information is obtained from the time synchronization unit by the service access unit, and the delay time during which the time synchronization protocol being added in and being dropped off the optical transport network is calculated based on the time information, and the delay time is written into the time correction field in the time synchronization protocol, and the time synchronization protocol calculates the accurate delay of the optical transport network according to the correction time, thereby ensuring that the protocol works normally.

### Brief Description of Drawings

FIG. 1 is a schematic diagram of the time synchronization protocol passing through the OTN network;
FIG. 2 is a schematic diagram of the structure of the system for transporting the time synchronization protocol in the optical transport network according to the present invention;
FIG. 3 is a schematic diagram of the structure of the service for transporting the synchronous Ethernet signal according to embodiment 2 of the present invention;
FIG. 4 is a schematic diagram of the structure of the service for transporting the synchronous Ethernet signal according to embodiment 3 of the present invention.

### Preferred Embodiments of the Present Invention

In order to make the object, technical scheme and advantages of the present invention clearer, the present invention will be further illustrated in combination with embodiments and drawings bellow.

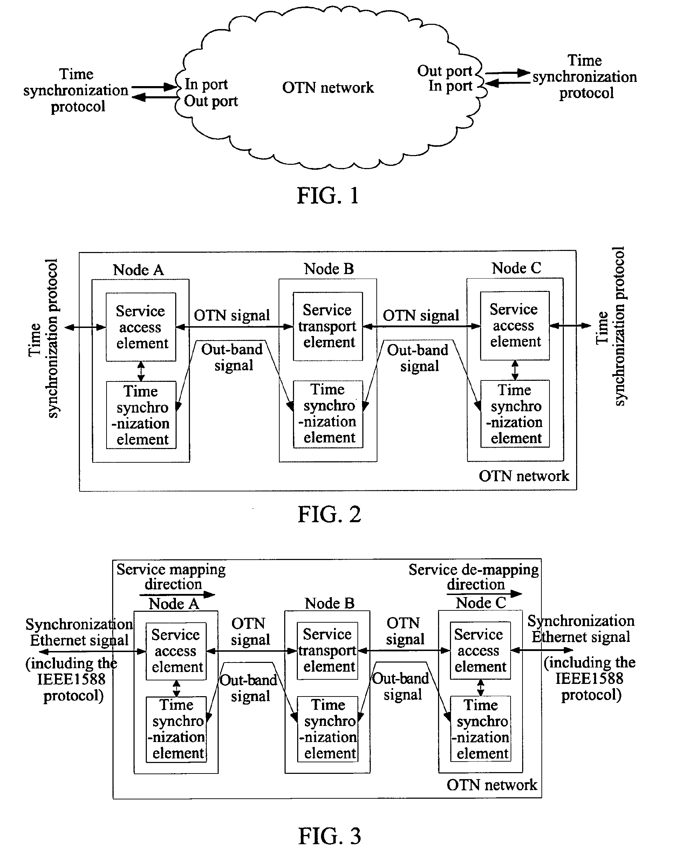

FIG. 1 is a schematic diagram of the time synchronization protocol passing through the OTN network of the present invention, and the basic concept of the present invention is that: when time synchronization protocol data are transported by an optical transport network, the delay time during which the time synchronization protocol data pass through the OTN network is calculated based on the accurate synchronization time feature inside the OTN network, and the time synchronization protocol synchronizes the time information during which the time synchronization protocol is added in and dropped off the OTN network according to the delay time obtained by calculation; or, the time source of the time synchronization protocol is taken as the time source of the OTN network, thereby ensuring the synchronization of the time information during which the time synchronization protocol is added in and dropped off the OTN network.

FIG. 2 is a schematic diagram of the structure of the system for transporting the time synchronization protocol by the optical transport network according to the present invention, which takes a typical OTN network structure as an example; the typical OTN network includes three nodes, the time synchronization protocol accesses node A, and is transported via the OTN network where node B is situated, and then is dropped at node C. The system described in the present invention mainly comprises: a service access unit, a time synchronization unit and a service transport unit.

The service access unit is configured to: access and process the time synchronization protocol; the service access unit obtains the local time information from the time synchronization unit, and calculates the delay time during which the time synchronization protocol being added in and dropped off the optical transport network according to the time information, and writes the delay time into the time correction field in the time synchronization protocol; the time synchronization protocol will calculate the accurate delay of the optical transport network according to the time correction field, thereby ensuring that the protocol operates normally.

The time synchronization unit is configured to: synchronize the time among various network element nodes inside the OTN network; each network element node of the OTN network includes a time synchronization unit; the time synchronization unit sends the time information of the time synchronization source node to each network element node in the OTN network; the transport of the time information uses an out-band way, which is not influenced by the unfixed OTN signal delay, thereby ensuring the accuracy of the time synchronization; the time synchronization unit provides the time information of the synchronization of the whole network for the service access unit inside each network element node.

The service transport unit is configured to: relay the OTN signal inside the OTN network, and may be regarded as a relay unit, and keep the transparent transport for the time synchronization protocol.

### Embodiment 1

The basic concept of the embodiment is that: when the time synchronization protocol data are added in and dropped off the OTN network, the delay time during which the time synchronization protocol data pass through the OTN network is calculated based on the accurate synchronization time inside the OTN network, and the delay time is written into the time correction field of the time synchronization protocol data packet, thereby correcting the influence on the time synchronization protocol caused by the unfixed delay time of the OTN network. The method of the present invention adapts to all of the time synchronization protocols, and may support the transport of any number of clock synchronization protocols at the same time.

It is assumed that the synchronous Ethernet signal (including the IEEE 1588 protocol) is transparently transported between node A and node B, and as shown in FIG. 3, the specific steps are as follows.

Step 101, the time synchronization unit of the network element node ensures that the nodes A, B and C have the synchronized time information inside the OTN network.

Step 102, when the synchronous Ethernet signal including the IEEE1588 protocol is added in the service access unit of the node A, and when the service is mapped, the local time is obtained from the local time synchronization unit to generate a timestamp, the synchronous Ethernet signal and the timestamp are mapped into the OTN signal all together, the OTN signal is transparently transported to node C via node B, and when the synchronous Ethernet signal is dropped off at the node C, the timestamp generated at node A is extracted from OTN signal and compared with the time of the local time synchronization unit, thereby calculating the delay time between node A and node C.

Step 103, node C extracts the synchronous Ethernet signal from the OTN signal, when the time related protocol packet in the IEEE1588 protocol is analyzed, the delay time obtained in step 102 is written into the correction information field of the protocol packet, and finally the synchronous Ethernet signal is sent by the client port, thereby finishing the transport of the synchronous Ethernet signal from nodes A to C, wherein the whole transport process ensures the clock transparent transport of the synchronous Ethernet signal.

### Embodiment 2

The OTN network may comprise one or more network element nodes as the time synchronization source nodes of the whole network. The time synchronization unit of each network element node of the OTN network sends the time information of the time synchronization source node to each network element node in the OTN network. The time synchronization source node may use a plurality of ways to obtain the time information, including but not limited to the following ways of: obtaining from the time synchronization protocol, obtaining from the GPS device, and obtaining from a specific physical time port, and so on.

In this embodiment, the time synchronization source node obtains the source time information from the time synchronization protocol, and sends the time information of the time synchronization source node to each network element node in the OTN network by the time synchronization unit of each network element node in the OTN network. The core concept of the embodiment is to use the feature of accurate time synchronization among various network element nodes inside the OTN network to implement the synchronization of the time information during which the time synchronization protocol is added in and dropped off the OTN network.

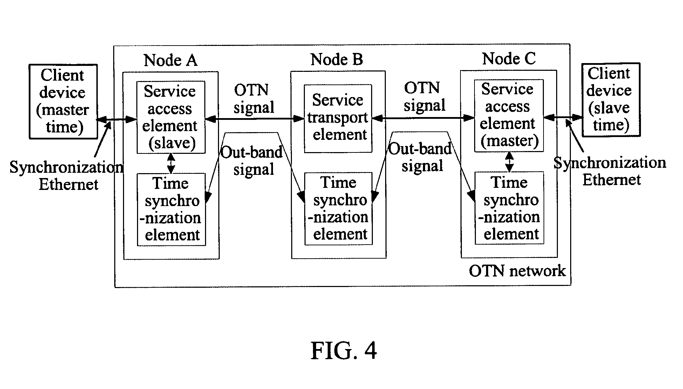

It is assumed that node A in the OTN network connects to the master time device of the client device, node C connects the slave device of the client device, and the synchronous Ethernet signal needs to be transported from node A to node C, as shown in FIG. 4. The transport of the synchronous Ethernet signal (including the IEEE 1588 protocol) is implemented according to the following steps.

Step 201: the time synchronization unit of the network element node ensures that nodes A, B and C have the synchronized time information inside the OTN network.

Step 202: the port that accesses the synchronous Ethernet is set as a slave mode at node A, at this point, this port acts as the receiver of the synchronous Ethernet time protocol and exchanges the synchronous Ethernet protocol with the client device (the master time), so as to ensure that the time and the clock of this port is synchronized with the time and clock information provided by the client device (the master time); meantime, the time and clock information obtained at this port is used as the time source of the time synchronization unit of this node, and the time and clock information of this port is propagated to other network element nodes of the optical transport network by the time synchronization unit of this node.

Step 203, the port that accesses the synchronous Ethernet is set as a master mode at node C, the local time and clock information act as the initiator of the synchronous Ethernet time protocol, and exchanges the synchronous Ethernet protocol with the client device (the slave time), so as to ensure that the time and clock information of the client device are consistent with those of node C.

In this embodiment, the time and clock information of the time synchronization units in the OTN network are all synchronized with the time and clock information of the master time client device, and the local time of node C naturally includes the delay time during which the time synchronization protocol passing through the OTN network after transporting the synchronous Ethernet signal to node C through the OTN network, and therefore, the local time and clock information of node C are synchronized to the slave time device after dropping the time synchronization protocol at node C can correct the influence on the time synchronization protocol caused by the unfixed delay time of the OTN network.

The above description is only preferred embodiments of the present invention rather than limiting the protection scope of the present invention.

## Claims

1. A method for bearing a time synchronization protocol in an optical transport network, comprising:
keeping time synchronization among various network element nodes inside the optical transport network (OTN); and
calculating a delay time during which time synchronization protocol data pass through the OTN, and then correcting the time synchronization protocol data at a drop node of the time synchronization protocol data according to the delay time; or taking a time source of the time synchronization protocol as a time source of the OTN, and transporting local time and clock information to a slave time client device at the drop node of the time synchronization protocol data.

2. The method according to claim 1, wherein the step of calculating the delay time and then correcting the time synchronization protocol data comprises:
A1, generating a timestamp according to a local time at a service access unit where the time synchronization protocol accesses the OTN, and transporting the timestamp to a service access unit at an output end together with the time synchronization protocol data; and
A2, the service access unit at the output end calculating the delay time in a process of transporting the time synchronization protocol data in the OTN according to a local time and the timestamp; when analyzing and obtaining a time related protocol packet in the time synchronization protocol data, writing the delay time into a correction information field of the protocol packet.

3. The method according to claim 1, wherein the step of taking the time source of the time synchronization protocol as the time source of the OTN, thereby implementing synchronization of time information of the time synchronization protocol data comprises:
B1, synchronizing the time and clock information on a service access unit where the time synchronization protocol accesses the OTN to time and clock information provided by a master time client device, and at a meantime, taking the time and clock information provided by the master time client device as the time source of a time synchronization unit of this node, and synchronizing the time and clock information of the node to other network element nodes of the OTN; and
B2, a service access unit at an output end taking local time and clock information as an initiator of the time synchronization protocol to transport the local time and clock information to the slave time client device.

4. A system for bearing a time synchronization protocol in an optical transport network, comprising:
an optical transport network (OTN), which is configured to: bear the time synchronization protocol, wherein various network element nodes inside the OTN keep time synchronization;
a sending end of the time synchronization protocol, which is configured to: send time synchronization protocol data to the OTN;
a receiving end of the time synchronization protocol, which is configured to: receive the time synchronization protocol data from the OTN; and
the OTN calculating a delay time of the time synchronization protocol data in the OTN, and correcting time information of the time synchronization protocol data according to the delay time; or the OTN taking the sending end of the time synchronization protocol as a time source, and transporting local time and clock information to the receiving end at a drop node of the time synchronization protocol data.

5. The system according to claim 4, further comprising:
a service access unit in the OTN is configured to: access and process the time synchronization protocol, and obtain local time information from a time synchronization unit, and calculate the delay time during which the time synchronization protocol is added in and dropped off the OTN according to the time information, and write this delay time into a time correction field in the time synchronization protocol;
the time synchronization unit in the OTN is configured to: synchronize a time among various network element nodes inside the OTN;
a service transport unit in the OTN is configured to: relay an OTN signal inside the OTN, and keep transparent transport for the time synchronization protocol.

6. The system according to claim 4, further comprising:
a service access unit in the OTN is configured to: access and process the time synchronization protocol, wherein the time and clock information of a service access unit at an input end is synchronized to the time and clock information at the sending end of the time synchronization protocol, and at a meantime, the time and clock information of a service access unit at the input end is synchronized to other network element nodes of the OTN; the service access unit of the output end takes the local time and clock information as an initiator of the time synchronization protocol to transport the local time and clock information to the receiving end of the time synchronization protocol;
a time synchronization unit in the OTN is configured to: synchronize a time and a clock among various network element nodes inside the OTN; and
a service transport unit in the OTN is configured to: relay an OTN signal inside the OTN, and keep transparent transport for the time synchronization protocol.
